(19) Europäisches Patentamt
European Patent Office
Office européen des brevets

(11) **EP 2 929 193 B1**

(12) **EUROPÄISCHE PATENTSCHRIFT**

(45) Veröffentlichungstag und Bekanntmachung des Hinweises auf die Patenterteilung:
**27.11.2019 Patentblatt 2019/48**

(21) Anmeldenummer: **13814431.6**

(22) Anmeldetag: **04.12.2013**

(51) Int Cl.:
*F15B 21/08* (2006.01)     *B29C 45/82* (2006.01)
*F15B 11/02* (2006.01)     *G05D 16/20* (2006.01)

(86) Internationale Anmeldenummer:
**PCT/EP2013/003660**

(87) Internationale Veröffentlichungsnummer:
**WO 2014/086484 (12.06.2014 Gazette 2014/24)**

(54) **VERFAHREN ZUM BETRIEB EINER HYDRAULIKEINRICHTUNG MIT PUMPE UND SERVOMOTOR SOWIE ZUGEHÖRIGE HYDRAULIKEINRICHTUNG**

METHOD FOR OPERATING A HYDRAULIC DEVICE WITH PUMP AND SERVOMOTOR, AND ASSOCIATED HYDRAULIC DEVICE

PROCÉDÉ PERMETTANT DE FAIRE FONCTIONNER UN DISPOSITIF HYDRAULIQUE MUNI D'UNE POMPE ET D'UN SERVOMOTEUR, ET DISPOSITIF HYDRAULIQUE ASSOCIÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **07.12.2012 DE 102012023902**

(43) Veröffentlichungstag der Anmeldung:
**14.10.2015 Patentblatt 2015/42**

(73) Patentinhaber: **Arburg GmbH + Co KG
72290 Lossburg (DE)**

(72) Erfinder:
• **KRAIBÜHLER, Herbert
72290 Lossburg (DE)**

• **DUFFNER, Eberhard
72181 Starzach (DE)**

(74) Vertreter: **Reinhardt, Harry
RPK Patentanwälte
Reinhardt, Pohlmann und Kaufmann
Partnerschaft mbB
Grünstraße 1
75172 Pforzheim (DE)**

(56) Entgegenhaltungen:
AT-A4- 507 087     DE-A1- 4 302 977
DE-A1- 19 547 308     DE-A1- 19 914 403
DE-C1- 19 680 008

EP 2 929 193 B1

**Beschreibung**

Die Erfindung betrifft ein Verfahren zum Betrieb einer Hydraulikeinrichtung zur Versorgung wenigstens eines hydraulischen Verbrauchers, vorzugsweise an einer Maschine zur Verarbeitung von Kunststoffen und anderer plastifizierbarer Materialien, mit einer Pumpe und einem Servomotor nach dem Oberbegriff des Anspruches 1.

Aus der dem Oberbegriff des Anspruches 1 zu Grunde liegenden DE 196 80 006 C1 sind ein gattungsgemäßes Verfahren bzw. eine gattungsgemäße Hydraulikvorrichtung bekannt. Sie umfasst eine Pumpe, die ein zu zyklischen Pulsationen führendes Volumenförderverhalten aufweist, sowie einen Servomotor mit mehreren zu zyklischen Pulsationen führenden Polen. Der Druck zum Verbraucher wird über einen Drucksensor einer Druckregelung zugeführt, die den Servomotor an Hand eines vorgegebenen oder vorgebbaren Druckverlaufs nachregelt. Zudem wird über einen Drehwinkelgeber der Drehwinkel von Pumpe und/oder Servomotor erfasst.

Aus der DE 103 16 946 A1 sind eine Vorrichtung und ein Verfahren zum Minimieren von zyklischen Pulsationen bekannt. Die zyklischen Pulsationen werden von einem Sensor detektiert und die Messwerte in einer Steuer-/Regeleinrichtung zur Ansteuerung eines Aktors verarbeitet, der Pulsationen erzeugt, die zumindest annähernd gegenphasig zu den detektierten Pulsationen sind.

Aus der DE 10 2008 019 501 A1 ist eine elektrohydraulische Steueranordnung bekannt, die auch an einer Kunststoff-Spritzgießmaschine eingesetzt werden kann. Eine verstellbare Fluidpumpe steht mit einem drehzahlvariablen elektrischen Antrieb in Verbindung. Druck und/oder Volumenstrom werden erfasst und über einen Druck/Mengenregler auf einen Sollwert nachgeregelt, indem mittels eines Frequenzumrichters ein Drehzahlsollwert bereitgestellt wird.

Aus der EP 0 431 150 B1 ist es bekannt, einen bürstenlosen Gleichstrommotor für Servoantriebe einzusetzen und dabei das "Cogging" zu minimieren, indem der Servomotor mit einem trapezförmigen Ansteuersignal betrieben wird und die Winkelposition des Rotors erfasst wird. Ansteuersignal und Winkelposition werden so überlagert, dass das Cogging verringert wird. Cogging entsteht dadurch, dass bei elektrischen Motoren der Rotor alternierend über magnetisches und nicht magnetisches Material geführt wird, sodass ein entsprechendes Rastmoment auftreten kann. Dabei ergibt sich ein sinusförmiger Strom, dessen Kommutierung von einer Wicklung oder einem Magneten zum anderen die Hauptursache für eine unrunde Laufcharakteristik ist.

Aus der EP 0 649 722 B1 ist eine Druckregelung für eine Kunststoff-Spritzgießmaschine bekannt, bei der eine Regelpumpe dem Bedarf des jeweiligen hydraulischen Verbrauchers durch eine Druckregelung nachgeführt wird. Ergänzend dazu wird die Regelpumpe mittels eines Drehstrommotors angetrieben, der durch einen Frequenzrichter in der Drehzahl geregelt wird, sodass die Pumpenleistung der Regelpumpe unterhalb ihrer durch den Frequenzumrichter bestimmten Maximalleistung am Regelorgan der Pumpe geregelt wird. Dadurch ist ein energiesparender Betrieb möglich.

Dem genannten Stand der Technik ist gemeinsam, dass grundsätzlich ein hydraulischer Antriebskreislauf durch eine Pumpe mit angekoppeltem Servomotor gebildet wird. Eine derartige Pumpe kann eine Konstantpumpe oder eine Verstellpumpe wie zum Beispiel eine Axialkolbenpumpe oder eine Radialpumpe sein. Typischerweise fördern derartige Pumpen zwar kontinuierlich Fluid, dies erfolgt jedoch unter Verwendung pulsatorisch arbeitender Elemente. So weist zum Beispiel eine Konstantpumpe wie z.B. eine Innenzahnradpumpe eine gewisse bauartbedingte Anzahl von Förderzähnen auf. Im Stand der Technik werden derartige hydraulische Antriebssysteme unter der Bezeichnung "Servopumpe" für Kunststoff-Spritzgießmaschinen als zentrale Antriebshydraulik verwendet, wenn die Maschinenachsen serielle Abläufe ausführen und energetisch optimal laufen sollen. Bedingt durch den großen Drehzahlbereich, in dem die Pumpen als auch die Servomotoren betrieben werden können, lassen sich häufig mit relativ kleinen Pumpenfördervolumina pro Umdrehung sehr große Literleistungen bei hohen Drehzahlen erzeugen. Benötigt der hydraulische Verbraucher einen geregelten quasistatischen Druck kann man diesen mittels einem in der Hydraulikleitung zum Verbraucher angebrachten Drucksensor und entsprechender Drehzahlregelung des Servomotors mit einer dazugehörigen Steuerung nahezu bei Drehzahl Null des Servomotors regeln, da nur geringste interne Leckagen in Pumpe und Verbrauchersystem vorhanden sind. Gerade in diesem Zustand macht sich jedoch der pulsierende Förderstrom der Pumpe bemerkbar.

Die handelsüblichen Pumpen, wie zum Beispiel bei einer Konstantpumpe die Zahnradpumpe aber auch die Kolbenpumpe, haben auf eine Pumpenumdrehung gesehen keinen drehwinkelkonstanten Volumenstrom, sondern weisen eine gewisse Mengenpulsation auf. Diese Mengenpulsation folgt aus der internen mechanischen Symmetrie der Pumpenausführung wie zum Beispiel der Anzahl der Förderzähne. Speziell bei sehr kleinen Drehzahlen und hohen Drücken kommt es so zu erheblichen Druckpulsationen, die zum Beispiel bei einer Spritzgießmaschine in der Nachdruckphase einen größeren Prozesseinfluss haben.

Ähnliche Druckpulsationen können auch durch den Aufbau des Servomotors erzeugt werden. Der Rotor des Servomotors bewegt sich innerhalb des Stators in Folge eines durch die Bestromung hervorgerufenen elektromagnetischen Feldes, das durch die Kommutierung der Pole erzeugt wird. Die sinusförmige Bestromung führt jedoch auch zu einem Rastmoment, dem sogenannten "Cogging", das gerade bei geringer Drehzahl auch zu Pulsationen führen kann, die sich der Anordnung der magnetischen und nicht magnetischen Elemente innerhalb des Stators zuordnen lassen.

Derartige Druckpulsationen könnten nun in der gleichen Weise ausgeregelt werden, wie die Druckregelung auch versucht, den vorgegebenen oder vorgebbaren Prozessdruck zu regeln. Dies hat allerdings zur Folge, dass man einen sehr schnellen und komplexen Regler realisieren müsste, da die sich ausbildende Pulsation von verschiedensten Systemeigenschaften beeinflusst wird, wie zum Beispiel dem Gesamtölvolumina in der Verbraucherleitung nach der Pumpe, der Öltemperatur oder der Achsstellung des Verbrauchers. Außerdem müssen Motor und Pumpe regelungstechnisch sehr steif gekoppelt sein, um dabei einen prozesstechnisch akzeptablen Druckverlauf zu realisieren. Dies hat eine sehr hohe elektrische Anregung/Bestromung zur Folge, was somit aus energetischer Sicht nachteilig ist.

Ausgehend von diesem Stand der Technik liegt der vorliegenden Erfindung die Aufgabe zugrunde, ein Verfahren zum Betrieb einer Hydraulikeinrichtung sowie eine Hydraulikeinrichtung zu schaffen, bei dem bzw. der die zyklische Druckpulsation minimiert ist.

Diese Aufgabe wird durch ein Verfahren zum Betrieb einer Hydraulikeinrichtung mit den Merkmalen des Anspruches 1 gelöst.

Ausgehend von der vorbekannten Druckregelung wird über einen Drehwinkelgeber der Drehwinkel von Pumpe und/oder Servomotor erfasst und mit den zyklischen Pulsationen zur Ermittlung eines Korrekturwerts oder einer Korrekturfunktion korreliert, der dann der Druckregelung übermittelt wird. Mit anderen Worten werden insbesondere zur quasistatischen Druckregelung der Motoransteuerung bzw. dem Servoregler die hydraulischen Eigenschaften von Pumpe und Servomotor quasi als Grundwissen mitgeteilt. Dadurch wird mittels einer geregelten Drehwinkelkopplung zwischen Motor und Pumpe insbesondere, aber nicht nur bei kleinen Drehzahlen eine geführte Kompensation der drehwinkelabhängigen zyklischen Pulsationen ermöglicht.

Vorzugsweise erfolgt dieser Regeleingriff an der Servoreglereinheit des Servomotors, sodass die Druckregelung der übergeordneten Steuerung dann nur noch die vom Prozess gewünschten Druckniveaus mittels der Stellgröße der Motordrehzahl des Servomotors ausregeln muss, wobei der Drehwinkelregler die Unzulänglichkeiten der Pumpe pro Umdrehungswinkel selbstständig kompensiert. Von Vorteil ist, dass die Servoreglereinheit, das heißt der Kommutierungsregler für den Servomotor, bauartbedingt wegen der hohen maximalen Drehzahl des Motors grundsätzlich schnelle Abtastraten benötigt, die derzeit üblicherweise im Bereich von 8 oder 16 kHz liegen. Demgegenüber kann die eigentliche Regelstrecke zum Verbraucher speziell an Kunststoff-Spritzgießmaschinen deutlich langsamere Reaktionszeiten aufweisen, wobei typische Abtastraten im Bereich von 1 kHz liegen. Somit macht eine derartige kaskadierte Regelung auch wirtschaftlich Sinn, da damit die übergeordnete Regelung und Steuerung für den Prozessdruck mit weniger Rechenleistung für diese Aufgabe auskommt. Zwar könnte auch der Drucksensor unmittelbar auf die Servoreglereinheit einwirken und damit dieser die Aufgabe geben, direkt den gewünschten Prozessdruck zu regeln, jedoch müsste damit der Servoreglereinheit in Echtzeit viel Prozessinformation bereitgestellt werden, sodass ein derartiger Regler sehr spezifisch an die jeweilige Spritzgießmaschine angepasst sein müsste. Durch eine entsprechend kaskadierte Regelung lässt sich dies jedoch vermeiden.

Vorzugsweise wird das "Grundwissen" über die Servomotor/Pumpeneinheit mittels Zuschalten einer kleinen Steuerblende in der Pumpenleitung zum Tank durch Korrelation von Druckpulsationskurve und Motordrehwinkel über der Zeit erfasst. Auf Basis dieser inline Streckenidentifikation und entsprechend hinterlegter Systemmodellparameter in der übergeordneten Steuerung kann so die Anlagen typische Druckpulsationskurve über dem Drehwinkel bestimmt werden, die dann der Druckregelung zur Verfügung gestellt wird.

Grundsätzlich erfolgt also eine Abbildung der Zusammenhänge zwischen den baulichen Gegebenheiten von Motor und/oder Pumpe hinsichtlich der Druckpulsationen. Diese Abbildung wird erfasst und daraus eine Korrekturfunktion gebildet. Die Abbildung kann drehzahlabhängig der Druckregelung unterlagert werden.

Vorzugsweise erfolgt die Modellanalyse über eine Fourier Analyse, wobei eine Fourierreihe vierter Ordnung meist genügt. Die so ermittelten Systemparameter werden der Servoreglereinheit als Asynchronparameter vor Einschalten der Hydraulikeinrichtung übergeben, sodass danach die entsprechende vorzugsweise kaskadierte Druckregelung in Echtzeit erfolgen kann.

Ergänzend können auch die die Pulsationen auslösenden Elemente an Pumpe und Servomotor aufeinander abgestimmt werden, um auch mechanisch die Druckpulsationen zu verringern. Dazu ist die Anzahl an Komponenten, die zu zyklischen Pulsationen an der wenigstens einen Pumpe führen, gleich der Anzahl von zyklische Pulsationen auslösenden Komponenten des Servomotors oder die einen sind ein Vielfaches der anderen. Vorzugsweise werden damit den Maxima an zyklischen Pulsationen der Pumpe die Minima der zyklischen Pulsationen des Servomotors bei der Montage zugeordnet.

Weitere Vorteile ergeben sich aus den Unteransprüchen und der nachfolgenden Beschreibung eines bevorzugten Ausführungsbeispiels.

Kurzbeschreibung der Figuren

Im Folgenden wird die Erfindung anhand der beigefügten Figuren an einem Ausführungsbeispiel näher erläutert. Es zeigen:

Fig. 1      einen schematischen Hydraulikschaltplan mit zugeordneten Regelorganen, wie er an einer Kunststoff-Spritzgießmaschine Einsatz finden kann,

Fig. 2      den mengen- und drehzahlabhängigen Druck über dem Drehwinkel des Servomotors,

Fig. 3      eine schematische Darstellung der Regelhierarchie,

Fig. 4, 5   ein Ausführungsbeispiel einer Kopplung von Servomotor und Pumpe in einer dreidimensionalen Darstellung und in Stirnansicht,

Fig. 6, 7   ein weiteres Ausführungsbeispiel einer Kopplung von Servomotor und Pumpe in einer dreidimensionalen Darstellung und in Stirnansicht bei Einsatz von zwei Pumpen.

Ausführliche Beschreibung bevorzugter Ausführungsbeispiele

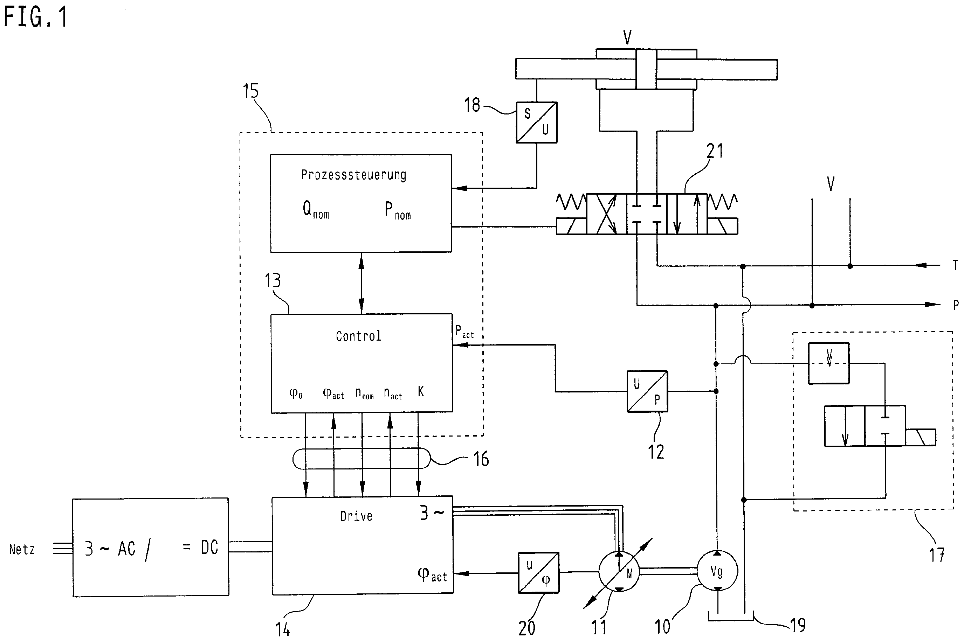

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht. In den Figuren ist ein Verfahren zum Betrieb einer Hydraulikeinrichtung zur Versorgung wenigstens eines hydraulischen Verbrauchers V erläutert, wie sie zum Beispiel an einer Maschine zur Verarbeitung von Kunststoffen und anderer plastifizierbarer Materialien wie pulverige keramische oder metallische Materialien verwendet werden kann. Einen entsprechenden schematischen Hydraulikschaltplan zeigt Fig. 1. Hydraulikmedium wird in einem Tank 19 zur Verfügung gestellt, aus dem es über eine Pumpe 10 an verschiedene Verbraucher V beziehungsweise Achsen der Maschinen gefördert wird. Derartige Verbraucher können Kolben-Zylindereinheiten, Rotationsmotoren, Druckzylinder, Auswerfer oder dergleichen sein, um nur einige Elemente einer Spritzgießmaschine zu erwähnen. Das Hydraulikmedium kann dabei über Ventile 21 den verschiedenen Verbrauchern V zugeleitet werden. Bei der Pumpe 10 kann es sich um jede beliebige Art von Pumpe handeln, wobei vorzugsweise Konstantpumpen mit einer pro Umdrehung gleichen Fördermenge, aber auch Verstellpumpen wie Axialkolbenpumpen oder Radialpumpen verwendet werden können. Die Pumpe 10 wird von einem Servomotor 11 angetrieben, der über eine Servoreglereinheit 14 geregelt wird. Über eine Prozesssteuerung wird den Verbrauchern ein Mengensollwert $Q_{nom}$ oder ein Drucksollwert $P_{nom}$ zur Verfügung gestellt, wobei zum Beispiel über einen Weggeber 18 die Stellung des Verbrauchers erfasst und diese Position in Abhängigkeit eines Wegsollwerts durch entsprechende Aufschaltung der Pumpe mittels des Ventils 21 auf die Achse des Verbrauchers V eingeregelt wird. Um die entsprechenden Mengen oder Drücke zur Verfügung zu stellen, steht die Prozesssteuerung mit einer Druckregelung 13 in Verbindung, die ihrerseits regelnden Einfluss auf die Servoreglereinheit 14 und damit auf den Servomotor 11 und die Pumpe 10 nimmt.

Sowohl Pumpe 10 als auch Servomotor 11 können einzeln oder für sich Pulsationen hervorrufen, die erfindungsgemäß nachgeregelt werden können. Die Pumpe 10 weist grundsätzlich bauartbedingt ein zu zyklischen Pulsationen führendes Volumenförderverhalten auf. Hierzu wird im Folgenden das Ausführungsbeispiel anhand einer Konstantpumpe erläutert, wenngleich auch andere Pumpenarten Verwendung finden können. Eine Konstantpumpe wie zum Beispiel eine Innenzahnradpumpe weist eine bestimmte Anzahl von Förderzähnen auf, sodass sich bei einer Umdrehung entsprechend zyklische Pulsationen einstellen. Diese Pulsationen sind bei hoher Drehzahl weniger wahrzunehmen, jedoch werden diese hydraulischen Antriebssysteme zum Beispiel gerade bei Kunststoff-Spritzgießmaschinen auch im quasistatischem Druckbereich eingesetzt, denn durch den großen Drehzahlbereich, in dem Pumpe als auch Servomotor betrieben werden können, reicht es häufig aus mit relativ kleinem Pumpenfördervolumina pro Umdrehung sehr große Literleistungen bei hohen Drehzahlen zu erzeugen. Benötigt der Verbraucher jedoch einen geregelten quasistatischen Druck wie zum Beispiel beim Nachdruck bei der Herstellung von Kunststoffspritzgießteilen, lässt sich dies zwar mittels dem in der Hydraulikleitung zum Verbraucher V angebrachten Drucksensor 12 und mit entsprechender Drehzahlsteuerung des Servomotors 11 bei einer Drehzahl von nahezu Null des Servomotors regeln. Dabei macht sich jedoch bei Zahnradpumpen, aber auch bei Kolbenpumpen die zyklische Pulsation bemerkbar, da je Pumpenumdrehung kein drehwinkelkonstanter Volumenstrom vorliegt, sondern eine gewisse Menge an Pulsation gekoppelt an die interne mechanische Symmetrie der Pumpenausführung wie zum Beispiel der Anzahl der Förderzähne auftritt. Diese zyklischen Pulsationen können einen großen Prozesseinfluss auf die Teileherstellung haben.

Eine ähnliche Wirkung kann sich auch aufgrund des "Coggings" ergeben, das durch den Aufbau des Servomotors auftreten kann. Der Rotor wird innerhalb des Stators eines Servomotors durch ein elektromagnetisches Feld bewegt, das von Pol zu Pol des Motors wandert. Dabei kommt der Rotor wechselweise über magnetisches bzw. magnetisierbares oder nicht magnetisches Material, sodass sich drehwinkelabhängig ebenfalls Pulsationen in Form von Rastmomenten einstellen können, insbesondere beim Betrieb des Servomotors mit geringer Drehzahl. Dies führt ebenfalls zu zyklischen Pulsationen, die gerade bei einer Spritzgießmaschine in der Nachdruckphase einen größeren Prozesseinfluss haben können.

Grundsätzlich wirken die Pulsationen immer auch drehzahlabhängig, so dass der Einfluss der Drehzahl vorzugsweise auch zu berücksichtigen ist. Es erfolgt also eine Abbildung der Zusammenhänge zwischen den baulichen Gegebenheiten von Motor und/oder Pumpe und den Druckpulsationen. Diese Abbildung wird erfasst und daraus eine Korrekturfunktion gebildet. Die Abbildung kann drehzahlabhängig der Druckregelung unterlagert werden. Unterstützt oder ersetzt werden kann diese Korrektur auch durch bauliche Änderungen, indem z.B. eine gleiche Anzahl von Pulsationen auslösenden Segmenten bzw. Abschnitten in Pumpe und Motor verwendet werden.

Der Druck am hydraulischen Verbraucher V wird über einen Drucksensor 12 erfasst und als Istwert einer Druckregelung 13 zugeführt. Diese Druckregelung regelt den von der Pumpe 10 aufgebrachten Druck mittels des Servomotors 11 anhand eines vorgegebenen oder vorgebbaren Druckverlaufs auf einen Drucksollwert am hydraulischen Verbraucher V nach. Ergänzend wird ein Drehwinkelgeber 20, der den Drehwinkel $\varphi$ der Pumpe 10 und/oder des Servomotors 11 erfasst und mit den zyklischen Pulsationen der Pumpe 10 und/oder des Servomotors 11 korreliert. Aus dieser Korrelation wird ein Korrekturwert oder eine Korrekturfunktion ermittelt und der Druckregelung 13 ergänzend zur Regelung des Drucksollwerts übermittelt.

Vorzugsweise wird dieser Korrekturwert unmittelbar der Servoreglereinheit 14 übermittelt, sodass eine kaskadierte Druckregelung möglich wird. Dies bedeutet, dass quasi eine Vorsteuerung, im regelungstechnischen Sinne, der zyklischen Pulsationen mit einer schnelleren Abtastrate von der Servoreglereinheit 14 durchgeführt wird, während die von der übergeordneten Steuerung 15 erfolgende Druckregelung 13 mit einer niedrigeren Abtastrate erfolgen kann. Dabei macht sich die Erfindung zunutze, dass der Kommutierungsregler der Servoreglereinheit 14 für den Servomotor 11 bauartbedingt aufgrund der hohen maximalen Drehzahlen des Motors, grundsätzlich eine schnelle Abtastrate benötigt. Üblich sind heutzutage hier Abtastraten von 8 oder 16 kHz. Die eigentliche Verbraucherregelstrecke zeichnet sich speziell an Kunststoff-Spritzgießmaschinen meist durch eine Regelstrecke mit im Vergleich dazu langsamen Reaktionszeiten aus, die üblicherweise im Bereich von 1 kHz liegen. Damit macht aus wirtschaftlicher Sicht eine Kaskadierung Sinn, da damit die Druckregelung 13 der übergeordneten Steuerung 15 mit weniger Rechenleistung für diese Aufgabe auskommt. Da die Vorsteuerung das Anlagenverhalten gesteuert implementiert und dadurch nicht wie bei Regelungen üblich eine Übererregung des Aktors zur Kompensation benötigt, ergibt das Verfahren eine energetisch vorteilhaftere Ausführung.

Als Pumpe 10 wird vorzugsweise eine Konstantpumpe verwendet, die zyklische Pulsationen des Volumenförderverhaltens pro Umdrehung aufweist. Die Pumpe kann zudem zumindest im Reversierbetrieb bedarfsweise Druck ablassen. Die Servoreglereinheit 14 kommuniziert vorzugsweise über eine digitale Echtzeit-Kommunikationsschnittstelle 16 mit dem übergeordneten Druckregler der Steuerung.

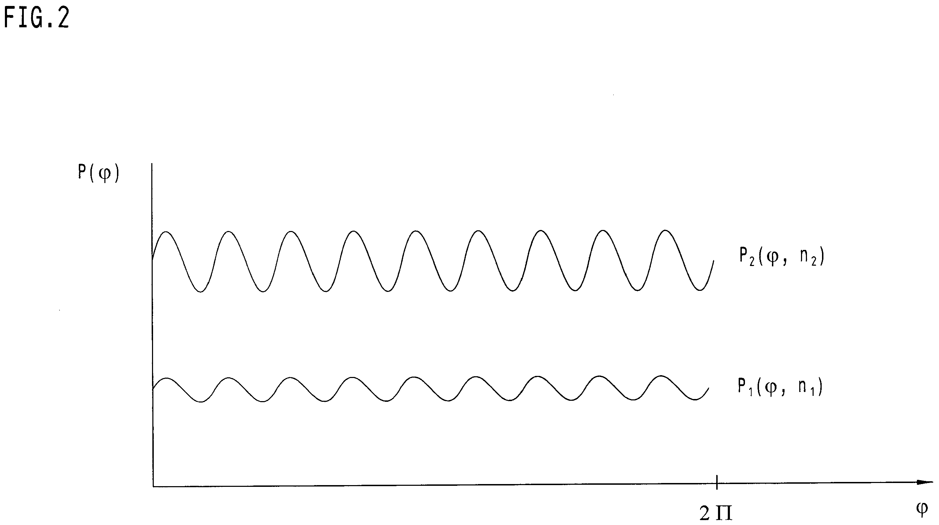

Fig. 2 zeigt das Pulsationsverhalten des Drucks $P(\varphi, n)$ in Abhängigkeit der Drehzahl n (und damit des Fördervolumens Q) über dem Drehwinkel $\varphi$. Dabei ist zu erkennen, dass eine sinusförmige Pulsation auftritt, die in ihrer Amplitude bei höherem Druck größer wird. Es stellt sich also auch eine Drehzahlabhängigkeit der Korrekturfunktion ein, die bedarfsweise ebenfalls zu berücksichtigen ist.

Die verfahrensgemäße Vorgehensweise ist wie folgt. Zunächst wird der Drehwinkel $\varphi(t)$ und die dazu gehörende Druckpulsation $P(t)$ der Pumpe 10 und/oder des Servomotors 11 erfasst, wobei diese Erfassung bei geöffneter Steuerblende 17 der Pumpe 10 im Verbraucherkreis bei verschiedenen Drücken $P_i(t)$ (entsprechend mit verschiedenen minimalen Drehzahlen $n_i$ am Servomotor) aufgezeichnet wird. Aus dem Kennfeld ($P_i(t)$, $\varphi_i(t)$, $n_i$) wird das Druckpulsationskennfeld ($P_i(\varphi)$, $n_i$) errechnet. Mittels Modellbildung aus dem prinzipiellen Ansatz, dass die Druckpulsation sich additiv auf den ansonsten sich theoretisch einstellenden Systemdruck aus Solldrehzahl, nicht pulsationsbehaftetem Fördervolumen der Pumpe und Blende verhält, wird nach der Beziehung

$$P_i(\varphi) = P_{\text{theoretisch}}(n_i, Q_i, \text{Blende}) - K * Y_1$$

die Pulsationskorrekturfunktion Y durch "Best Fit" der entsprechenden Parameter $\varphi_0$, $\Delta\varphi_n$, $a_n$ und der gewünschten Eingriffsmultiplikatorfunktion K (P, n) gebildet zu:

$$Y = K(P_{nom}, n_{nom}) * \sum_{n=1}^{4} a_n \sin\left(n * z * (\varphi_{act} + \varphi_0) + \Delta\varphi_n\right)$$

wobei

K     Eingriffsmultiplikator

$a_n$     Systemkoeffizient anlagentypisch für die Phasenlagen

z     Geometriekonstante, abhängig von Anzahl der Pumpenzähne und/oder der Polzahl des Motors (cogging)

$\varphi_{act}$     Istwertlage des Drehwinkels im Servomotor

$\varphi_0$      Montageversatz quasi bei Druck 0 zwischen dem Gebernullpunkt des Servomotors und dem nächst liegenden Pumpenzahn

$\Delta\varphi_n$      Pumpentypische Phasenlage der Pulsation bei verschieden hohen Systemdrücken der Oberwelle der Pulsation zum Gebernullpunkt des Motors

Der Montageversatz $\varphi_0$, der durch die Montage der Pumpe zum Servomotor bestimmt wird, kann in einem Online-Abgleichverfahren bestimmt werden, indem z.B. bei sehr kleiner Solldrehzahl (quasistatisch bei kleinem Druck), aufgeschalteter Blende 17 und ohne Pulsationskorrektur die Kennkurve $(P_0(\varphi), n_0)$ in der übergeordneten Steuerung 15 aufgenommen und errechnet wird, und dann in der errechneten Pulsationskurve $P_0(\varphi)$, beginnend mit $\varphi=0$ aufsteigend, so lange gesucht wird bis $P_0(\varphi_0)= \max (P_0(\varphi))$ gilt. Die Inline-Adaption des Montageversatzes ist vor allem bei Inbetriebnahme oder möglichem Tausch von Motor bzw. Pumpe im Servicefall notwendig. Die Methode des vorzugsweise "Best-Fit" Ansatzes mittels trigonometrischer Fourierzerlegung der Pulsationskorrekturfunktion Y hat sich als erfolgreich ausreichend genau für die Anwendung in der Spritzgießmaschine herausgestellt.

Der Eingriffsmultiplikator K ist erforderlich, um den umdrehungsgeschwindigkeitsabhängigen Einfluss der Pulsation zu berücksichtigen. Üblicherweise ist dieser Eingriffsmultiplikator K bei geringen Drehzahlen größer als bei großen Drehzahlen, das heißt umgekehrt proportional zur Umdrehungsgeschwindigkeit. Dies muss aber nicht so sein. Ergänzend ergibt sich eine Phasenverschiebung $\varphi_n$ zwischen dem Drehwinkel $\varphi$ und der Pulsation $P_i(\varphi)$ bei verschiedenen Solldrücken $P_i$. Diese Systemparameter werden durch eine Modellanalyse bestimmt, die vorzugsweise eine Fourier Analyse ist. Dabei hat sich herausgestellt, dass eine zuverlässige Modellierung der Kurve durch eine Fourierreihe vierter Ordnung bereits möglich ist.

Die Systemmodellparameter werden vor Einschalten der Hydraulikeinrichtung als Asynchronparameter der Servoreglereinheit 14 übergeben. Die Drehzahl n des Servomotors 11 wird entsprechend der Drehzahlsollvorgabe $n_{nom}$ von der übergeordneten Steuerung 15 mit periodischer Drehzahlkorrektur pro Umdrehung geregelt, wie sie durch die Systemmodellparameter vorgegeben wird. Proportional erfolgt mittels des in Echtzeit von der übergeordneten Steuerung 15 vorgegebenen Eingriffsmultiplikators K eine Anpassung des Eingriffs umdrehungsgeschwindigkeitsabhängig. Die Übergabe und Vorgabe von Systemmodellparametern an die Servoreglereinheit 14 erfolgt in Echtzeit mittels einer Ethernet-Schnittstelle, vorzugweise mittels des Varan-Protokolls.

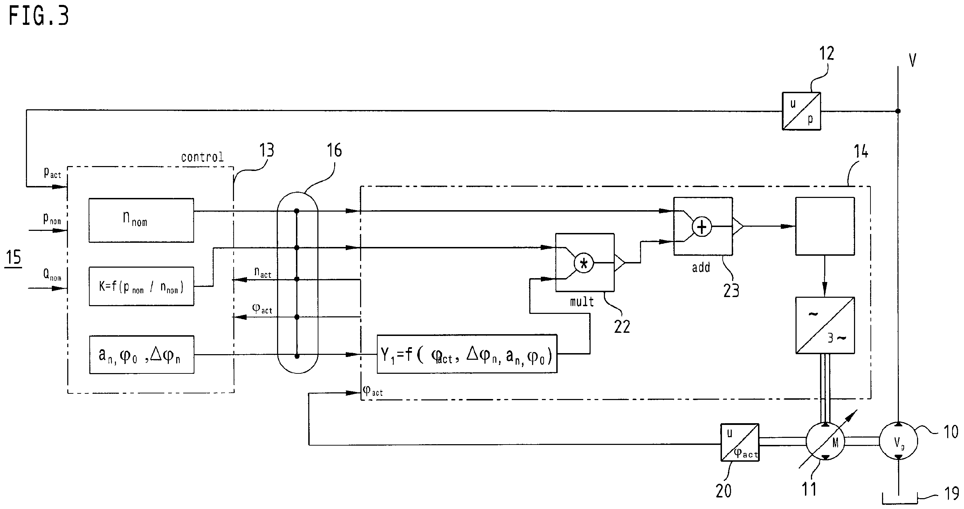

Die Druckregelung ist schematisch in Fig. 3 dargestellt. Die Pumpe 10 fördert aus dem Tank 19 Hydraulikmedium an den Verbraucher V. Dazu wird der Motor 11 von der Servoreglereinheit 14 angesteuert. Ein Druckregler 12 erfasst den Druckwert $P_{act}$ und gibt diesen an die übergeordnete Steuerung 15. Der Steuerung 15 werden auch der Drucksollwert $P_{nom}$ und/oder der Mengensollwert $Q_{nom}$ vorgegeben. Aufgrund der Modellanalyse sind der Steuerung auch der Systemparameter $a_n$, des Montageversatzes $\varphi_0$ und die drehzahlabhängige Phasenverschiebung $\Delta\varphi_n$ bekannt, die über die Schnittstelle 16 an die Servoreglereinheit 14 übergeben werden. Aus den Sollgrößen berechnet die Drucksteuerung die Solldrehzahl $n_{nom}$. Bekannt ist der Druckregelung zudem die zuvor ermittelte Korrekturfunktion $K = K (P_{nom}, Q_{nom})$. Zudem erhält die übergeordnete Steuerung 15 von der Servoreglereinheit 14 den aktuellen Drehwinkel $\varphi_{act}$ und die Drehzahl $n_{act}$ des Servomotors. Dazu ist der mit dem Servomotor 11 gekoppelte Drehwinkelgeber 20 mit der Servoreglereinheit 14 verbunden. In der Servoreglereinheit 14 wird nun zunächst der Eingriffsmultiplikator K mit der Korrekturfunktion Y1 im Multiplikator 22 multipliziert. Der so ermittelte Wert wird dann im Addierer 23 mit dem Drehzahlsollwert $n_{nom}$ addiert. Dieser Wert wird dann der Druckregelung 13 übergeben, die damit den Servomotor 11 ansteuert.

Im Rahmen der Regelung erfolgt zunächst ein Abgleich zwischen dem Montageversatz $\varphi_0$ zwischen Motor und Pumpe. Basierend hierauf erfolgt eine Inlineadaption des Systemparameters $\Delta_{\varphi n}$. K, $a_n$ und $\varphi_0$ werden dann an die Servoreglereinheit 14 übertragen. Die Modellbildung kann wie oben beschrieben aber auch durchaus offline Maschinentyp-spezifisch erfolgen. Im Regelprozess selbst werden $Q_{nom}$, $P_{nom}$ vorgegeben, wobei dann anhand der Korrekturfunktion für $n_{nom}$, $K(Q_{nom}, P_{nom})$ berechnet wird. In Abhängigkeit des Druckistwerts $P_{act}$ wird so die erforderliche Drehzahl $n_{nom}$ berechnet und dann werden der Eingriffsmultiplikator K und die Stellgröße $n_{nom}$ an die Servoreglereinheit 14 übertragen.

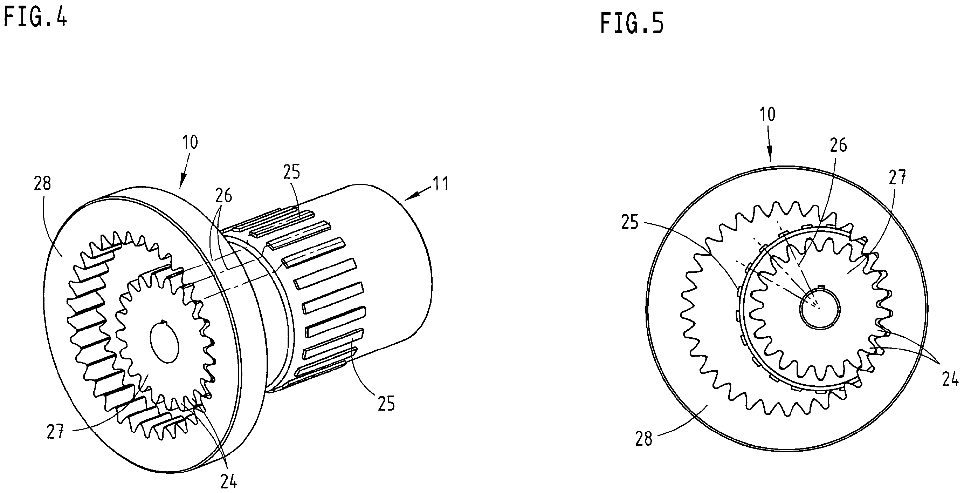

Unterstützt werden kann diese Korrektur auch durch bauliche Änderungen, indem z.B. gemäß den Fig. 4 bis 7 eine gleiche Anzahl von Pulsationen auslösenden Segmenten bzw. Abschnitten in der wenigstens einen Pumpe 10 und im Servomotor 11 verwendet werden bzw. die einen ein Vielfaches der anderen sind. Damit werden die die Pulsationen auslösenden Komponenten 24, 29 an Pumpe und Servomotor aufeinander abgestimmt, um auch mechanisch die Druckpulsationen zu verringern. Vorzugsweise werden damit den Maxima an zyklischen Pulsationen der Pumpe 10 die Minima der zyklischen Pulsationen des Servomotors 11 bei der Montage zugeordnet.

Die Fig. 4, 5 zeigen ein derartiges Ausführungsbeispiel, in dem eine Pumpe 10 und ein Servomotor 11 über die angedeutete mechanische Kopplung 26 einander zugeordnet sind. Dabei sind als Komponenten 24 der Pumpe 10 die Pumpenzähne den Magneten als Komponenten 25 des Servomotors 11 zugeordnet. Die Pumpenzähne sind Teil eines Zahnrads 27, das im Zahnkranz 28 der Pumpe 10 umläuft. Die Anzahl von Pumpenzähnen entspricht hier der Anzahl der Magneten, es können aber ebenso die einen ein Vielfaches der anderen sein.

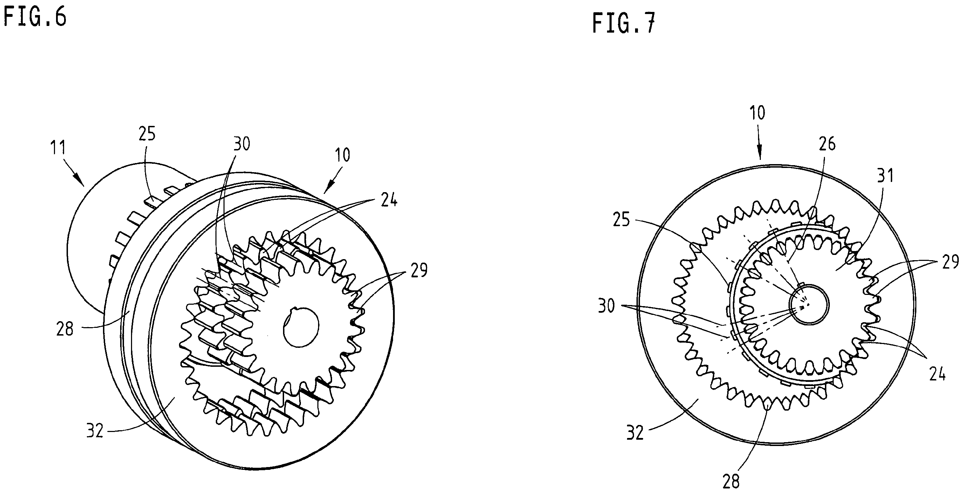

Im Ausführungsbeispiel der Fig. 6,7 wirken die Komponenten zweier vorzugsweise baugleicher Pumpen 10 - es könnten auch mehr als zwei sein - mit einem Servomotor über eine mechanische Kopplung 30 zusammen. Die zu den zyklischen Pulsationen führenden Komponenten 24, 29, die Pumpenzähne sind dabei zueinander versetzt, d.h. vorzugsweise steht der Pumpenzahn des einen Zahnrads 27 auf Lücke mit dem anderen Zahnrad 31. Diese Zahnräder laufen beim Betrieb der Pumpe in den jeweiligen Zahnkränzen 28, 32 um. Die mechanische Kopplung 30 erfolgt dann mit entsprechender Zuordnung zu den Komponenten 25 - den Magneten - des Servomotors 11. Vorzugsweise sind die beiden baugleiche Pumpen halb so groß wie im ersten Ausführungsbeispiel und sind in der gleichen Phasenorientierung wie im ersten Ausführungsbeispiel auf eine Welle montiert, um sich dann gegenseitig zu kompensieren.

**Bezugszeichenliste**

| | |
|---|---|
| 10 | Pumpe |
| 11 | Servomotor |
| 12 | Drucksensor |
| 13 | Druckregelung |
| 14 | Servoreglereinheit |
| 15 | übergeordnete Steuerung |
| 16 | Echtzeit-Kommunikationsschnittstelle |
| 17 | Steuerblende |
| 18 | Weggeber |
| 19 | Tank |
| 20 | Drehwinkelgeber |
| 21 | Ventil |
| 22 | Multiplikator |
| 23 | Addierer |
| 24, 29 | Komponenten der Pumpe |
| 25 | Komponenten des Servomotors |
| 26, 30 | mechanische Kopplung |
| 27,31 | Zahnräder |
| 28, 32 | Zahnkranz |
| V | hydraulischer Verbraucher |
| $\varphi$ | Drehwinkel |
| $\varphi_0$ | Montageversatz |
| $\Delta\varphi_i$ | Phasenverschiebung |
| $a_i$ | Systemkoeffizient |
| K | Eingriffsmultiplikator |
| $n_{nom}$ | Drehzahlsollvorgabe |

**Patentansprüche**

1. Verfahren zum Betrieb einer Hydraulikeinrichtung zur Versorgung wenigstens eines hydraulischen Verbrauchers (V), vorzugsweise eines Verbrauchers an einer Maschine zur Verarbeitung von Kunststoffen und anderer plastifizierbarer Materialien, wobei die Hydraulikeinrichtung wenigstens eine Pumpe (10), die ein zu zyklischen Pulsationen führendes Volumenförderverhalten aufweist, und einen Servomotor (11) mit mehreren zu zyklischen Pulsationen führenden Polen umfasst,
wobei der Druck zum hydraulischen Verbraucher (V) über einen Drucksensor (12) erfasst und als Istwert einer Druckregelung (13) zugeführt wird, die den Servomotor (11) anhand eines vorgegebenen oder vorgebbaren Druckverlaufs auf einen einem Drehzahlsollwert ($n_{nom}$) entsprechenden Drucksollwert am hydraulischen Verbraucher (V) nachregelt,
wobei über einen Drehwinkelgeber (20) der Drehwinkel ($\varphi$) der wenigstens einen Pumpe (10) und/oder des Servomotors (11) erfasst wird,
**dadurch gekennzeichnet, dass** der über den je einen Drehwinkelgeber (20) erfasste Drehwinkel ($\varphi$) der wenigstens einen Pumpe (10) und/oder des Servomotors (11) mit den zyklischen Pulsationen (P(t)) korreliert wird, und
dass daraus eine Korrekturfunktion ($Y_1$) ermittelt wird, die mit einem Eingriffsmultiplikator (K) multipliziert zum Drehzahlsollwert $n_{nom}$ addiert wird,
wobei die so ermittelte Summe der Druckregelung (13) zur Regelung des Drucksollwerts übermittelt wird.

**2.** Verfahren nach Anspruch 1, **dadurch gekennzeichnet, dass** als Pumpe (10) eine Konstantpumpe verwendet wird, die die zyklischen Pulsationen des Volumenförderverhaltens pro Umdrehung aufweist.

**3.** Verfahren nach Anspruch 1 oder 2, **dadurch gekennzeichnet, dass** die Pumpe (10) zumindest im Reversierbetrieb bedarfsweise Druck ablässt.

**4.** Verfahren nach einem der vorhergehenden Ansprüche, **dadurch gekennzeichnet, dass** dem Servomotor (11) eine Servoreglereinheit (14) zugeordnet ist, die die Drehzahl geregelte Vorsteuerung der zyklischen Pulsationen mit einer schnelleren Abtastrate durchführt als die Abtastrate der Druckregelung (13), die mittels einer übergeordneten Steuerung (15) durchgeführt wird.

**5.** Verfahren nach Anspruch 4, **dadurch gekennzeichnet, dass** die Servoreglereinheit (14) über eine digitale Echtzeit-Kommunikationsschnittstelle (16) mit dem übergeordneten Druckregler (13) der Steuerung kommuniziert.

**6.** Verfahren nach einem der vorhergehenden Ansprüche, **dadurch gekennzeichnet, dass** die Erfassung eines Montageversatzes ($\varphi_0$) des Drehwinkels durch Korrelieren eines Druckpulsationssignals der Pumpe (10) und/oder des Servomotors (11) bei minimal geöffneter Steuerblende (17) der Pumpe (10) im Verbraucherkreis im Verhältnis zum Drehwinkel ($\varphi$) des Servomotors erfolgt.

**7.** Verfahren nach einem der vorhergehenden Ansprüche, **dadurch gekennzeichnet, dass** zur Ermittlung des Korrekturwerts Systemmodellparameter wie ein Systemkoeffizient ($a_n$), der Eingriffsmultiplikator (K) und eine Phasenverschiebung ($\Delta\varphi_n$) zur Ermittlung einer Druckpulsationskurve $P_{act}(\varphi)$ über dem Drehwinkel ($\varphi$) bestimmt wird.

**8.** Verfahren nach Anspruch 7, **dadurch gekennzeichnet, dass** die Bestimmung des Systemparameters durch eine Modellanalyse wie einer Fourieranalyse, insbesondere durch eine Fourierreihe vierter Ordnung erfolgt.

**9.** Verfahren nach Anspruch 7 oder 8, **dadurch gekennzeichnet, dass** die Systemmodellparameter vor Einschalten der Hydraulikeinrichtung als Asynchronparameter der Servoreglereinheit (14) übergeben werden.

**10.** Verfahren nach einem der Ansprüche 7 bis 9, **dadurch gekennzeichnet, dass** die Drehzahl (n) des Servomotors (11) entsprechend der Drehzahlsollvorgabe ($n_{nom}$) von der übergeordneten Steuerung (15) mit periodischer Drehzahlkorrektur pro Umdrehung geregelt wird, wie durch die Systemmodellparameter vorgeben, und proportional mittels eines in Echtzeit von der übergeordneten Steuerung (15) vorgegebenen Eingriffsmultiplikators (K) eine Anpassung des Eingriffs umdrehungsgeschwindigkeitsabhängig erfolgt.

**11.** Verfahren nach einem der Ansprüche 7 bis 10, **dadurch gekennzeichnet, dass** die Übergabe und Vorgabe von Systemmodellparametern an die Servoreglereinheit (14) in Echtzeit mittels einer Ethernet-Schnittstelle, vorzugsweise mittels des Varan-Protokolls erfolgt.

**12.** Verfahren nach einem der vorhergehenden Ansprüche, **dadurch gekennzeichnet, dass** als Korrekturmittel für die Druckregelung baulich zur Berücksichtigung der Pulsationen die Anzahl von zu den zyklischen Pulsationen führenden Komponenten (24,29) der wenigstens einen Pumpe (10) gleich der Anzahl von zyklische Pulsationen auslösenden Komponenten (25) des Servomotors (11) gesetzt wird oder die Anzahl der einen Komponenten ein Vielfaches der Anzahl der anderen Komponenten gesetzt wird.

**13.** Verfahren nach Anspruch 12, **dadurch gekennzeichnet, dass** wenigstens zwei vorzugsweise baugleiche, hinsichtlich der zu den zyklischen Pulsationen führenden Komponenten (24,29) zueinander versetzte Pumpen (10) mit einem Servomotor (11) zusammenwirken.

**14.** Verfahren nach Anspruch 12 oder 13, **dadurch gekennzeichnet, dass** dem Maximum an zyklischen Pulsationen der Pumpe (10) ein Minimum der zyklischen Pulsationen des Servomotors (11) bei der Montage zugeordnet wird.

**Claims**

**1.** A method for operating a hydraulic device for supplying at least one hydraulic consumer (V), preferably a consumer on a machine for processing plastics and other plasticizable materials, wherein the hydraulic device comprises at least one pump (10), which has a volumetric conveying characteristic resulting in cyclic pulsing and a servo motor (11) having a plurality of poles resulting in cyclic pulsing,
wherein the pressure to the hydraulic consumer (V) is detected by way of a pressure sensor (12) and is supplied as an actual value to a pressure control (13) which adjusts the servo motor (11), on the basis of a predetermined or predeterminable pressure profile, at the hydraulic consumer (V) to a pressure setpoint value corresponding to a speed setpoint value ($n_{nom}$),
wherein the rotary angle ($\varphi$) of the at least one pump (10) and/or of the servo motor (11) is detected by a rotary encoder (20),
**characterised in that** the rotary angle ($\varphi$) of the at least one pump (10) and/or of the servo motor (11) that is detected by way of the in each case one rotary encoder (20) is correlated to the cyclic pulsing, and
**in that** from this correlation a correction function ($Y_1$) is determined, which multiplied with an operational multiplier (K) is added to the speed setpoint value ($n_{nom}$), wherein the sum calculated is transmitted to the pressure control (13) for regulating the pressure setpoint value.

**2.** A method according to Claim 1, **characterised in that** a fixed displacement pump is used as the pump (10), comprising cyclic pulsing of the volumetric conveying characteristic on each revolution.

**3.** A method according to Claim 1 or 2, **characterised in that** the pump (10) lets pressure down if required, at least in a reversing mode.

**4.** A method according to one of the preceding claims, **characterised in that** a servo regulator unit (14) is associated with the servo motor (11) and carries out the rotational speed-regulated pre-control of the cyclic pulsing at a faster scanning rate than the scanning rate of the pressure control (13), which is carried out by means of a higher-level control (15).

**5.** A method according to Claim 4, **characterised in that** the servo regulator unit (14) communicates with the higher-level pressure control (13) of the control by way of a digital real-time communication interface (16).

**6.** A method according to one of the preceding claims, **characterised in that** detection of a mounting offset ($\varphi_0$) of the rotary angle is performed by correlating a pressure pulse signal of the pump (10) and/or of the servo motor (11), with the control orifice (17) of the pump (10) in the consumer circuit opened to a minimal extent, in relation to the rotary angle ($\varphi$) of the servo motor.

**7.** A method according to one of the preceding claims, **characterised in that**, to determine the correction value, a system modelling parameter such as a system coefficient ($a_n$), the operational multiplier (K) and a phase shift ($\Delta\varphi_n$) is determined for determining a pressure pulse curve $P_{act}(\varphi)$ over the rotary angle ($\varphi$).

**8.** A method according to Claim 7, **characterised in that** the system parameter is determined by a modelling analysis such as a Fourier analysis, in particular by a fourth-order Fourier series.

**9.** A method according to Claim 7 or 8, **characterised in that**, before the hydraulic device is switched on, the system modelling parameters are transmitted to the servo regulator unit (14) as asynchronous parameters.

**10.** A method according to one of Claims 7 to 9, **characterised in that** the rotational speed (n) of the servo motor (11) is regulated according to the speed setpoint value ($n_{nom}$) by the higher-level control (15) with periodic speed correction per revolution, as predetermined by the system modelling parameters, and the operation is adapted in a manner dependent on rotational speed, proportionately by means of an operational multiplier (K) that is predetermined in real time by the higher-level control (15).

**11.** A method according to one of Claims 7 to 10, **characterised in that** system modelling parameters are transmitted and input to the servo regulator unit (14) in real time by means of an Ethernet interface, preferably by means of the VARAN protocol.

**12.** A method according to one of the preceding claims, **characterised in that**, as the correction means for the pressure control, for taking into account the pulsing, structurally the number of components (24, 29) that result in cyclic pulsing of the at least one pump (10) equals the number of components (25) of the servo motor (11) that trigger cyclic pulsing, or that the number of one components is set to a multiple of the number of the other components.

**13.** A method according to Claim 12, **characterised in that** at least two preferably structurally alike pumps (10) that are offset from one another in respect of the components (24, 29) which result in cyclic pulsing cooperate with a servo motor (11).

14. A method according to Claim 12 or 13, **characterised in that** a minimum of cyclic pulsing of the servo motor (11) is associated with the maximum of cyclic pulsing of the pump (10) at the time of mounting.

**Revendications**

1. Procédé permettant de faire fonctionner un dispositif hydraulique pour l'approvisionnement d'au moins un utilisateur hydraulique (V), de préférence un utilisateur au niveau d'une machine pour l'élaboration de matières plastiques et d'autres matériaux plastifiables, dans lequel le dispositif hydraulique comprend au moins une pompe (10), laquelle présente une performance volumétrique conduisant à des pulsations cycliques, et un servomoteur (11) avec plusieurs pôles conduisant à des pulsations cycliques,

   dans lequel la pression fournie à l'utilisateur hydraulique (V) est mesurée à l'aide d'un détecteur de pression (12) et est fournie en tant que valeur réelle à un réglage de pression (13), lequel règle ensuite le servomoteur (11) à l'aide d'un profil de pression prédéterminé ou prédéterminable à une valeur nominale de pression correspondant à une valeur nominale de nombre de rotations ($n_{nom}$) au niveau de l'utilisateur hydraulique (V),

   dans lequel l'angle de rotation ($\varphi$) de la ou des pompes (10) et/ou du servomoteur (11) est mesuré au moyen d'un donneur d'angle de rotation (20),

   **caractérisé en ce que** l'angle de rotation ($\varphi$) de la ou des pompes (10) et/ou du servomoteur (11) mesuré au moyen du donneur d'angle de rotation (20) respectif est corrélé avec les pulsations cycliques (P(t)) et **en ce qu'**une fonction de correction ($Y_1$) en est tirée, laquelle est multipliée par un multiplicateur d'intervention (K) et additionnée à la valeur nominale du nombre de rotations $n_{nom}$, la somme ainsi obtenue étant transmise au réglage de pression (13) pour le réglage de la valeur nominale de pression.

2. Procédé selon la revendication 1, **caractérisé en ce qu'**on utilise comme pompe (10) une pompe constante qui présente les pulsations cycliques de la performance volumétrique par rotation.

3. Procédé selon la revendication 1 ou 2, **caractérisé en ce que** la pompe (10) relâche si nécessaire de la pression au moins en fonctionnement inverse.

4. Procédé selon l'une des revendications précédentes, **caractérisé en ce qu'**au servomoteur (11) est associée une unité de servo-réglage (14) qui exécute la précommande réglée du nombre de rotations des pulsations cycliques à l'aide d'une fréquence d'échantillonnage plus rapide que la fréquence d'échantillonnage du réglage de pression (13), lequel est effectué au moyen d'une commande (15) maîtresse.

5. Procédé selon la revendication 4, **caractérisé en ce que** l'unité de servo-réglage (14) communique avec le régleur de pression maître (13) à l'aide d'une interface de communication numérique en temps réel (16).

6. Procédé selon l'une des revendications précédentes, **caractérisé en ce que** la mesure d'un décalage de montage ($\varphi_0$) de l'angle de rotation s'effectue par une corrélation d'un signal de pulsation de pression de la pompe (10) et/ou du servomoteur (11) avec un volet de commande (17) de la pompe (10) ouvert au minimum (17) dans la boucle d'utilisateur par rapport à l'angle de rotation ($\varphi$) du servomoteur.

7. Procédé selon l'une des revendications précédentes, **caractérisé en ce que** pour l'obtention de la valeur de correction, des paramètres du modèle du système, tel qu'un coefficient de système ($a_n$), le multiplicateur d'intervention (K) et un décalage de phase ($\Delta\varphi_n$) est déterminé pour l'obtention d'une courbe de pulsation de pression $P_{act}(\varphi)$ au moyen de l'angle de rotation ($\varphi$).

8. Procédé selon la revendication 7, **caractérisé en ce que** la détermination du paramètre système s'effectue au moyen d'une analyse de modèle telle qu'une analyse de Fourier, en particulier à l'aide d'une série de Fourier de quatrième ordre.

9. Procédé selon la revendication 7 ou 8, **caractérisé en ce que** les paramètres du modèle du système sont transmis avant la mise en route du dispositif hydraulique en tant que paramètres asynchrones de l'unité de servo-réglage (14).

10. Procédé selon l'une des revendications 7 à 9, **caractérisé en ce que** le nombre de rotations (n) du servomoteur (11) est réglé en fonction de la prédétermination de la valeur nominale du nombre de rotations ($n_{nom}$) de la commande maîtresse (15) avec une correction du nombre de rotations périodiques par rotation, comme prédéterminé par les paramètres du modèle du système, et une adaptation de l'intervention s'effectue en fonction de la vitesse de rotation, proportionnellement, au moyen d'un multiplicateur d'intervention (K) prédéterminé par la commande maîtresse (15) en temps réel.

11. Procédé selon l'une des revendications 7 à 10, **caractérisé en ce que** la transmission et l'objectif des paramètres du modèle du système s'effectue au niveau de l'unité de servo-réglage (14) en temps réel au moyen d'une interface Ethernet, de préférence au moyen du protocole Varan.

12. Procédé selon l'une des revendications précédentes, **caractérisé en ce qu'**on fixe comme moyen de correction pour le réglage de pression structurellement pour la prise en compte des pulsations, le nombre des composants (24,29) conduisant à des pulsations cycliques de la ou des pompes (10) comme étant égal au nombre des composants (25) provoquant des pulsations cycliques du servomoteur (11), ou le nombre de certains des composants est fixé comme étant un multiple du nombre des autres composants.

13. Procédé selon la revendication 12, **caractérisé en ce qu'**au moins deux pompes (10) de préférence de structure identique, décalées l'une par rapport à l'autre vis-à-vis des composants (24,29) provoquant des pulsations cycliques coopèrent avec un servomoteur (11).

14. Procédé selon la revendication 12 ou 13, **caractérisé en ce qu'**un minimum de pulsations cycliques du servomoteur (11) est associé au maximum des pulsations cycliques de la pompe (10) lors du montage.

FIG.1

FIG.2

EP 2 929 193 B1

FIG.3

FIG.4

FIG.5

EP 2 929 193 B1

FIG.6

FIG.7

EP 2 929 193 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19680006 C1
- DE 10316946 A1
- DE 102008019501 A1
- EP 0431150 B1
- EP 0649722 B1